(19) **Europäisches Patentamt**

**European Patent Office**

**Office européen des brevets**

(11) **EP 1 539 830 B1**

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(51) Int Cl.⁷: **C08F 8/28**

(21) Anmeldenummer: **03757786.3**

(86) Internationale Anmeldenummer:
**PCT/EP2003/009821**

(22) Anmeldetag: **04.09.2003**

(87) Internationale Veröffentlichungsnummer:
**WO 2004/026917 (01.04.2004 Gazette 2004/14)**

(54) **VERFAHREN ZUR HERSTELLUNG VON POLYVINYLACETALEN**

METHOD FOR PRODUCING POLYVINYLACETALS

PROCEDE DE PREPARATION DE POLYVINYLACETALES

(84) Benannte Vertragsstaaten:
**AT BE BG CH CY CZ DE DK EE ES FI FR GB GR HU IE IT LI LU MC NL PT RO SE SI SK TR**

(30) Priorität: **12.09.2002 DE 10242417**

(43) Veröffentlichungstag der Anmeldung:
**15.06.2005 Patentblatt 2005/24**

(73) Patentinhaber: **Wacker Polymer Systems GmbH & Co. KG**
**84489 Burghausen (DE)**

(72) Erfinder:
- **STARK, Kurt**
**84508 Burgkirchen (DE)**
- **TSCHIRNER, Peter**
**84547 Emmerting (DE)**

- **EICHEL, Karl-Heinz**
**84489 Burghausen (DE)**
- **FRIEDL, Georg**
**84489 Burghausen (DE)**
- **EICHBERGER, Franz**
**A-5144 Handenberg (AT)**

(74) Vertreter: **Schuderer, Michael et al**
**Wacker-Chemie GmbH**
**Zentralabteilung Patente**
**Marken und Lizenzen**
**Hanns-Seidel-Platz 4**
**81737 München (DE)**

(56) Entgegenhaltungen:
**EP-A- 0 000 699        DE-A- 1 495 548**
**DE-A- 19 641 064**

**Beschreibung**

Die Erfindung betrifft ein Verfahren zur Herstellung von Polyvinylacetalen, wobei als wässriges Medium in dem die Acetalisierung erfolgt, die Mutterlauge eines vorhergehenden Ansatzes verwendet wird.

Die Herstellung von Polyvinylacetalen, die aus den entsprechenden Polyvinylalkoholen durch polymeranaloge Umsetzung mit den entsprechenden Aldehyden erhalten werden, ist bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozeß (Polyvinylacetat -> Polyvinylalkohol -> Polyvinylacetal) hergestellt, wobei Produkte resultieren, welche neben Vinylacetalgruppen noch Vinylalkohol- und Vinylacetat-Einheiten enthalten. Kommerzielle Bedeutung haben vor allem Polyvinylformal, Polyvinylacetacetal, Polyvinylbutyral (PVB), sowie modifizierte Polyvinylacetale, welche neben den genannten drei Einheiten, Vinylacetat, Vinylalkohol und Vinylacetal, noch weitere Monomereinheiten enthalten.

Der größte Anwendungsbereich für Polyvinylacetale ist die Herstellung von Sicherheitsgläsern im Automobilbau und in der Architektur, wobei weichgemachte Polyvinylbutyral-Folien als Zwischenschicht in Glasscheiben eingesetzt werden. Ein weiteres Einsatzgebiet für Polyvinylbutyrale ist die Verwendung in korrosionsschützenden Beschichtungen, was zum Beispiel aus der EP-A 1055686 zu entnehmen ist. Unter anderem aufgrund ihrer guten Pigment-Bindekraft werden Polyvinylbutyrale auch als Bindemittel in Lacken und speziell in Druckfarben eingesetzt. Beispiele hierfür sind die modifizierten Polyvinylbutyrale mit niedriger Lösungsviskosität aus der DE-A 19641064, welche durch Acetalisierung eines Copolymeren mit Vinylalkohol- und 1-Alkyl-Vinylalkohol-Einheiten gewonnen werden.

Zur Herstellung von Polyvinylacetalen wird in dem obengenannten 3-Stufen-Prozess eine Lösung von Polyvinylalkohol in Wasser bereitet, diese wird mit Säure versetzt und das Polyvinylacetal wird aus dieser Lösung (Mutterlauge) durch Zugabe von Aldehyden ausgefällt. Das Produkt wird von der Mutterlauge getrennt, gegebenenfalls nachbehandelt, gewaschen und getrocknet. In dem Verfahren gemäß der EP-B 513857 wird zur Erhöhung des Acetalisierungsgrades vorgeschlagen, die Acetalisierung mit einem Temperaturgradienten durchzuführen, das heißt die Temperatur während der Fällung zu erhöhen.

Es bestand die Aufgabe, das Verfahren zur Herstellung von Polyvinylacetalen billiger und umweltfreundlicher zu gestalten.

Überraschenderweise wurde gefunden, dass die Qualität der Mutterlauge so gut ist - und auch bei mehrfachem Wiedereinsatz so gut bleibt, dass diese zur Herstellung weiterer Polyvinylacetale wieder eingesetzt werden kann.

Gegenstand der Erfindung ist ein Verfahren zur Herstellung von Polyvinylacetalen, erhältlich mittels Verseifung eines Vinylester-Polymerisats und anschließender Acetalisierung des damit erhaltenen Polyvinylalkohols mit einem oder mehreren Aldehyden aus der Gruppe umfassend aliphatische und aromatische Aldehyde, mit 1 bis 15 C-Atomen, wobei

a) der Polyvinylalkohol in einem wässrigen Medium vorgelegt wird,

b) gegebenenfalls durch Zugabe von Säure ein pH-Wert von < 1 eingestellt wird,

c) die Acetalisierung durch Zugabe der Aldehydkomponente eingeleitet wird, und

d) das ausfallende Polyvinylacetal durch Filtration vom Filtrat abgetrennt wird,

dadurch gekennzeichnet, dass als wässriges Medium zu 10 bis 100 Gew.-% das Filtrat eines vorausgegangenen Ansatzes verwendet wird, und gegebenenfalls das in d) anfallende Filtrat in einem weiteren Ansatz wiederverwendet wird.

Geeignete Vinylester-Polymerisate sind solche auf der Basis von einem oder mehreren Vinylester von unverzweigten oder verzweigten Carbonsäuren mit 1 bis 15 C-Atomen. Bevorzugte Vinylester sind Vinylacetat, Vinylpropionat, Vinylbutyrat, vinyl-2-ethylhexanoat, Vinyllaurat, 1-Methylvinylacetat, Vinylpivalat und Vinylester von $\alpha$-verzweigten Monocarbonsäuren mit 5 bis 11 C-Atomen, beispielsweise VeoVa9R oder VeoVa10R (Handelsnamen der Firma Shell). Besonders bevorzugt ist Vinylacetat.

Die Vinylester-Polymerisate können gegebenenfalls noch Monomereinheiten enthalten, welche sich von einem oder mehreren Monomeren aus der Gruppe umfassend ungesättigte Mono- oder Dicarbonsäuren bzw. deren Ester von Alkoholen mit 1 bis 15 C-Atomen, Olefine, Diene, Vinylaromaten und Vinylhalogenide, ableiten. Geeignete Monomere aus der Gruppe der ungesättigten Mono- oder Dicarbonsäuren sind Acrylsäure, Methacrylsäure, Fumarsäure und Maleinsäure. Geeignete Monomere aus der Gruppe der Ester der ungesättigten Mono- oder Dicarbonsäuren sind Ester von unverzweigten oder verzweigten Alkoholen mit 1 bis 15 C-Atomen. Bevorzugt sind Methacrylsäureester oder Acrylsäureester wie Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird vorzugsweise so bemessen, dass der Anteil an Vinylestermonomer ≥ 50 Mol-% im Vinylester-Copolymerisat beträgt.

Gegebenenfalls können die Comonomeren noch weitere Comonomere in einem Anteil von vorzugsweise 0.02 bis 20 Gew.-%, bezogen auf das Gesamtgewicht der Comonomere, enthalten. Beispiele sind ethylenisch ungesättigte Carbonsäureamide und -nitrile, vorzugsweise N-Vinylformamid, Acrylamid und Acrylnitril; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Besonders bevorzugt werden Polyvinylacetat, Vinylacetat-1-Methylvinylacetat-Copolymere und Vinylacetat-(Meth)acrylsäure-Copolymere.

Die Polymerisation zur Herstellung geeigneter Polyvinylester erfolgt in bekannter Weise, vorzugsweise durch Substanzpolymerisation, Suspensionspolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol und Acetaldehyd. Die Polymerisation wird unter Rückfluß bei einer Temperatur von 55°C bis 100°C durchgeführt und durch Zugabe gängiger Initiatoren radikalisch initiiert. Beispiele für gängige Initiatoren sind Percarbonate wie Cyclohexylperoxidicarbonat oder Perester wie t-Butylperneodecanoat oder t-Butylperpivalat. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Nach Abschluß der Polymerisation wird das Lösungsmittel sowie gegebenenfalls überschüssiges Monomer und Regler abdestilliert.

Die Verseifung der Vinylester-Polymerisate zu Polyvinylalkoholen erfolgt in an sich bekannter Weise, zum Beispiel nach dem Band- oder Kneterverfahren, im Alkalischen oder Sauren unter Zugabe von Säure oder Base. Vorzugsweise wird das Festharz in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von NaOH, KOH oder NaOCH$_3$. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt. Nach Abschluß der Hydrolyse wird das Lösungsmittel abdestilliert und der Polyvinylalkohol wird als Pulver erhalten. Der Polyvinylalkohol kann aber auch durch eine sukzessive Zugabe von Wasser, während das Lösungsmittel abdestilliert wird, als wässrige Lösung gewonnen werden.

Die teil- oder vollverseiften Vinylesterpolymerisate haben vorzugsweise einen Hydrolysegrad von 50 Mol-% bis 100 Mol-%, besonders bevorzugt von 70 Mol-% bis 99 Mol-%, am meisten bevorzugt von ≥ 96 Mol-%. Als vollverseift bezeichnet man dabei solche Polymerisate, deren Hydrolysegrad ≥ 96 Mol-% ist. Als teilverseifte Polyvinylalkohole sind solche zu verstehen, mit einem Hydrolysegrad ≥ 50 Mol-% und < 96 Mol-%.

Zur Acetalisierung werden die teil- oder vollverseiften Polyvinylacetate in wässrigem Medium aufgenommen, wobei als wässriges Medium zu 10 bis 100 Gew.-% das Filtrat eines vorausgegangenen Ansatzes verwendet wird. Üblicherweise wird ein Festgehalt der wässrigen Lösung von 5 bis 30 Gew.-% eingestellt. Vorzugsweise wird der Polyvinylalkohol als wässrige Lösung mit einer Konzentration von 10 bis 50 Gew.-% vorgelegt, und der gewünschte Festgehalt durch Zugabe des Filtrats (Mutterlauge) eines vorausgegangenen Ansatzes, welches Wasser, Säure und in geringer Konzentration restliche Aldehyde enthält, eingestellt. Die Mutterlauge kann vorher einer Filtration unterzogen werden, um den Feststoffgehalt darin verbliebenen vorherigen Produkts zu minimieren. Gegebenenfalls kann der Festgehalt zur Fällung zusätzlich noch durch Zugabe von Wasser auf den gewünschten Wert eingestellt werden.

Die Acetalisierung erfolgt in Gegenwart von Säure (sauren Katalysatoren) wie Salzsäure, Schwefelsäure, Salpetersäure oder Phosphorsäure bei einem pH-Wert von < 1. Sollte der mit der Mutterlauge erhaltene pH-Wert noch zu hoch sein, wird zusätzliche Säure zugegeben. Vorzugsweise wird durch Zugabe von 20 %-iger Salzsäure der pH-Wert der Lösung auf einen Wert < 1 eingestellt.

Nach Zugabe der Säure wird die Lösung auf vorzugsweise -10°C bis +30°C abgekühlt. Dabei gilt: Je niedriger das Molekulargewicht des eingesetzten Polyvinylalkohols, umso geringer wird die Fälltemperatur gewählt. Nach dem Einstellen der Fälltemperatur wird die Fällung des Polyvinylacetals durch Zugabe der Aldehydkomponente eingeleitet.

Bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd oder eine Mischung aus Butyr- und Acetaldehyd. Als aromatische Aldehyde können beispielsweise Benzaldehyd oder dessen Derivate verwendet werden. Die Zugabemenge an Aldehyd richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden. Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das ausfallende Polyvinylacetal

**EP 1 539 830 B1**

durch Filtration vom Filtrat abgetrennt. Das pulverförmige Reaktionsprodukt wird nach einem Waschschritt und Trocknungsschritt isoliert.

Die Mutterlauge (Filtrat), aus der der Ansatz ausgefällt wurde, wird vorzugsweise aufbewahrt und für eine nachfolgende Fällung eingesetzt. Zur Stabilisierung des Produkts können ferner Alkalien zugesetzt werden. Während der Fällung und der Nachbehandlung kann mit Emulgatoren gearbeitet werden, um die wässrige Suspension des Polyvinylacetals zu stabilisieren.

Zur Stabilisierung der wässrigen Suspension des Polyvinylacetals können anionische, zwitterionische, kationische und nichtionische Emulgatoren sowie Schutzkolloide verwendet werden. Bevorzugt werden zwitterionische oder anionische Emulgatoren eingesetzt, gegebenenfalls auch in Mischungen. Als nichtionische Emulgatoren werden bevorzugt Kondensationsprodukte von Ethylenoxid oder Propylenoxid mit linearen oder verzweigten Alkoholen mit 8 bis 18 Kohlenstoffatomen, Alkylphenolen oder linearen oder verzweigten Carbonsäuren von 8 bis 18 Kohlenstoffatomen eingesetzt, sowie Blockcopolymere von Ethylenoxid und Propylenoxid eingesetzt. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 2 bis 25 EO-Einheiten, Alkylphenolen, und Mono- oder Diester der Sulfobernsteinsäure. Geeignete zwitterionische Emulgatoren sind beispielsweise Alkyldimethylaminoxide, wobei die Alkylkette 6 bis 16 C-Atome besitzt. Als kationische Emulgatoren können z. B. Tetraalkylammoniumhalogenide, wie $C_6$-$C_{16}$-Alkyltrimethylammoniumbromid verwendet werden. Ebenso können Trialkyamine mit einem längeren ($\geq$ 5 C-Atome) und zwei kürzeren Kohlenwasserstoffresten (< 5 C-Atome) eingesetzt werden, die im Zuge der Acetalisierung, die unter stark sauren Bedingungen abläuft, in protonierter Form vorliegen und als Emulgator wirken können. Die Emulgatormenge beträgt 0.01 bis 20 Gew.-%, bezogen auf das Gesamtgewicht des Polyvinylacetals in der Mutterlauge. Bevorzugt ist eine Menge von 0.01 bis 2 Gew.-% an Emulgator, besonders bevorzugt ist eine Menge von 0.01 bis 1 Gew.-% Emulgator bezogen auf das Polyvinylacetal.

Die mit dem erfindungsgemäßen Verfahren gewonnenen Polyvinylacetale besitzen einen Acetalisierungsgrad von 1 bis 80 Mol-%, vorzugsweise 45 bis 80 Mol-%. Die Viskosität der Polyvinylacetale (DIN 53015; Methode nach Höppler, 10 %-ige Lösung in Ethanol) beträgt mindestens 2 mPas bis 1200 mPas, vorzugsweise 4 bis 60 mPas. Der Polymerisationsgrad beträgt mindestens 100.

Das erfindungsgemäße Verfahren zur Herstellung von Polyvinylacetalen ist gegenüber den im Stand der Technik beschriebenen Verfahren sowohl ökologischer, da Abwässer weniger belastet werden, als auch ökonomischer, da ein großer Teil der Rohstoffe, insbesondere der Säure, gespart werden kann.

Das erfindungsgemäße Verfahren zur Herstellung von Polyvinylacetalen, insbesondere Polyvinylbutyralen oder gemischten Polyvinylacetalen, führt zu Produkten, die in Druckfarbenzusammensetzungen Verwendung finden können.

Geeignete Druckfarbenformulierungen sind dem Fachmann bekannt und enthalten im allgemeinen 5 bis 30 Gew.-% Pigmentanteil, beispielsweise Disazo- oder Phthalocyanin-Pigmente, 5 bis 20 Gew.-% Polyvinylacetal-Bindemittel und Lösungsmittel, beispielsweise Alkohole wie Ethanol oder Ester wie Ethylacetat. Gegebenenfalls können noch weitere Zusatzstoffe wie Verzögerer, Weichmacher und andere Additive, wie beispielsweise Füllstoffe oder Wachse, enthalten sein. Gegebenenfalls können zusätzlich auch noch Haftvermittler zugegeben werden.

Auch für Verbundsicherheitsglas und Glasverbunde, Hochsicherheitsglas oder Scheibenfolien sind die mit dem erfindungsgemäßen Verfahren zugänglichen Polyvinylacetale sehr gut geeignet.

Des weiteren dienen wasserlösliche, teilacetalisierte Polyvinylacetale, die mit dem erfindungsgemäßen Verfahren hergestellt wurden und die auch ionische Gruppen wie Carboxylat- oder Sulfonatgruppen enthalten können, als Schutzkolloid, beispielsweise für wässrige Dispersionen und bei der Polymerisation in wässrigem Medium, und bei der Herstellung von in Wasser redispergierbaren Dispersionspulvern. Bevorzugt werden dabei wasserlösliche (Löslichkeit von mehr als 10 g/l in Wasser unter Normalbedingungen) Polyvinylacetale mit einem Acetalisierungsgrad von 1 bis 20 Mol-%, insbesondere 3 bis 16 Mol-%.

Die mit dem erfindungsgemäßen Verfahren hergestellten Polyvinylacetale können ferner in Lacken auf wässriger Basis Verwendung finden.

Weitere Einsatzgebiete der mit dem erfindungsgemäßen Verfahren hergestellten Polyvinylacetale sind die Verwendung als Bindemittel in Korrosionsschutzmitteln, als Bindemittel in der Keramikindustrie, speziell als Binder für keramische Grünkörper, als Bindemittel für Keramikpulver und Metallpulver im Spritzguß (powder injection molding) und als Bindemittel für die Innenbeschichtung von Dosen.

Die nachfolgenden Beispiele dienen zur weiteren Erläuterung der Erfindung.

Die Vergleichsbeispiele 1 und 11 beschreiben die im Stand der Technik bekannte Herstellung von Polyvinylacetalen ohne Einsatz von Mutterlauge. Bei den Beispielen 2 bis 10 bzw. 12 bis 20 wurde die Mutterlauge der vorhergehenden Ansätze zu ca. 92 % wieder eingesetzt.

Vergleichsbeispiel 1:

In einem 6 Liter Glasreaktor wurden 2617 ml dest. Wasser, 826 ml 20 %-ige HCl und 1355 ml einer 20 %-igen wässrigen Lösung eines Polyvinylalkohols (Verseifungszahl VZ 20.0 mg KOH/g, Viskosität 3.18 mPas (DIN 53015; Methode nach Höppler; 4 %-ige wässrige Lösung)) vorgelegt. Die Vorlage wurde unter Rühren innerhalb einer Stunde auf +5°C abgekühlt. Anschließend wurden in einem Zeitraum von 5 Minuten 100 ml Acetaldehyd, vorgekühlt auf -4°C, zugegeben. Die Reaktorinnentemperatur stieg dabei auf +7°C an. Innerhalb kürzester Zeit wurde wieder auf +5°C abgekühlt und bei dieser Temperatur 20 Minuten gerührt. Danach wurden im selben Zeitraum von 5 Minuten 128 ml Butyraldehyd, vorgekühlt auf -4°C, zugegeben. Die Innentemperatur stieg dabei kurzzeitig auf 6.5°C an. Fünf bis sieben Minuten nach Zugabe des Butyraldehyds wurde der zunächst klare Ansatz milchig trüb, und bereits 10 Minuten später fiel das Produkt aus. Nach 40 Minuten Reaktionszeit bei +5°C wurde die Temperatur über einen Zeitraum von 3.5 Stunden auf 25°C erhöht und diese Temperatur für weitere 1.5 Stunden gehalten. Daraufhin wurde das Produkt abgesaugt und solange mit destilliertem Wasser gewaschen, bis das Filtrat neutral reagierte. Die Mutterlauge wurde für den nächsten Ansatz aufbewahrt. Anschließend erfolgte die Trocknung des Produkts bis zu einem Festgehalt von mindestens 98 %, zunächst bei 22°C, dann bei 35°C im Vakuum.

Es wurde ein Polyvinylacetal mit 13.6 Gew.-% Vinylalkohol-Einheiten erhalten. Der Vinylacetat-Gehalt lag unter 2 Gew.-%. Die Viskosität (DIN 53015; Methode nach Höppler; 10 %-ige ethanolische Lösung) betrug 19.0 mPas.

Beispiel 2:

Es wurde analog Vergleichsbeispiel 1 vorgegangen mit dem Unterschied, dass 3151 ml Mutterlauge, die im Zuge der Aufarbeitung aus Vergleichsbeispiel 1 gewonnen wurde, eingesetzt wurden. Die Mutterlauge wurde zusammen mit 1355 ml der 20 %-igen wässrigen Polyvinylalkohol-Lösung und 292 ml 20 %-ige Salzsäure in die Vorlage gegeben. Es ergab sich eine Säurekonzentration von 5.20 Gew.-%, die Leitfähigkeit der Mischung belief sich auf 410 mS/cm. Acetaldehyd- und Butyraldehydmenge, Fällung und Aufarbeitung war analog Vergleichsbeispiel 1.

Es wurde ein Polyvinylacetal mit 13.3 Gew.-% Vinylalkohol-Einheiten erhalten. Der Vinylacetat-Gehalt lag unter 2 Gew.-%. Die Viskosität (DIN 53015; Methode nach Höppler; 10 %-ige ethanolische Lösung) betrug 19.0 mPas.

Beispiele 3 bis 10:

Es wurde analog Beispiel 2 vorgegangen, wobei jeweils als wässriges Medium der in Tabelle 1 genannte Anteil an Mutterlauge des vorhergehenden Ansatzes eingesetzt wurde. Es wurde in der Vorlage stets eine Säurekonzentration zwischen 5.10 und 5.25 Gew.-% eingestellt.

Die Zusammensetzungen der Ansätze sind Tabelle 1 zu entnehmen. Die Analyseergebnisse der jeweiligen Endprodukte zeigt Tabelle 2.

Vergleichsbeispiel 11:

In einem 6 Liter Glasreaktor wurden 2715 ml dest. Wasser, 1114 ml 20 %-ige HCl und 1172 ml einer 20.0 %-igen wässrigen Lösung eines Polyvinylalkohols (Verseifungszahl VZ 20.0 mg KOH/g, Viskosität 3.18 mPas (DIN 53015; Methode nach Höppler; 4 %-ige wässrige Lösung)) vorgelegt. Die Vorlage wurde unter Rühren innerhalb einer Stunde auf -2°C abgekühlt und anschließend wurden innerhalb eines Zeitraumes von 5 Minuten 190 ml Butyraldehyd, vorgekühlt auf -4°C, zugegeben. Die Reaktorinnentemperatur stieg dabei auf 0°C an. Innerhalb kürzester Zeit wurde wieder auf -2°C abgekühlt. Zirka 3 Minuten nach Zugabe des Butyraldehyds wurde der bis dahin klare Ansatz milchig trüb und bereits 5 Minuten später fiel das Produkt aus. Nach 40 Minuten Reaktionszeit bei -2°C wurde die Temperatur über einen Zeitraum von 3.5 Stunden auf 25°C erhöht und diese Temperatur für weitere 1.5 Stunden gehalten. Daraufhin wurde das Produkt abgesaugt und solange mit destilliertem Wasser gewaschen, bis das Filtrat neutral reagierte. Die Mutterlauge wurde für den nächsten Ansatz aufbewahrt. Anschließend erfolgte die Trocknung des Produkts bis zu einem Festgehalt von mindestens 98 Gew.-%, zunächst bei 22°C, dann bei 35°C im Vakuum.

Es wurde ein Polyvinylbutyral mit 18.4 Gew.-% Vinylalkohol-Einheiten erhalten. Der Vinylacetat-Gehalt lag unter 2 Gew.-%. Die Viskosität (DIN 53015; Methode nach Höppler; 10 %-ige ethanolische Lösung) betrug 18.5 mPas.

Beispiel 12:

Es wurde analog Vergleichsbeispiel 11 vorgegangen mit dem Unterschied, dass 3481 ml Mutterlauge, die im Zuge der Aufarbeitung aus Vergleichsbeispiel 11 gewonnen wurde, eingesetzt wurden. Die Mutterlauge wurde zusammen mit 1172 ml der 20 %-igen wässrigen Polyvinylalkohol-Lösung und 348 ml 20 %-ige Salzsäure in die Vorlage gegeben. Es ergab sich eine Säurekonzentration von 6.30 %, die Leitfähigkeit der Mischung belief sich auf 477 mS/cm. Butyraldehydmenge, Fällung und Aufarbeitung wie in Vergleichsbeispiel 11.

Es wurde ein Polyvinylacetal mit 17.5 Gew.-% Vinylalkohol-Einheiten erhalten. Der Vinylacetat-Gehalt lag unter 2 Gew.-%. Die Viskosität (DIN 53015; Methode nach Höppler; 10 %-ige ethanolische Lösung) betrug 18.0 mPas.

Beispiele 13 bis 20:

Es wurde analog Beispiel 12 vorgegangen, wobei jeweils als wässriges Medium der in Tabelle 3 genannte Anteil an Mutterlauge des vorhergehenden Ansatzes eingesetzt wurde. Es wurde in der Vorlage stets eine Säurekonzentration zwischen 6.20 bis 6.31 Gew.-% eingestellt.

Die Zusammensetzungen der Ansätze sind Tabelle 3 zu entnehmen. Die Analyseergebnisse der jeweiligen Endprodukte zeigt Tabelle 4.

Der Vergleich von Vergleichsbeispiel 1 (Standard-Herstellmethode für gemischte Polyvinylacetale) mit den Beispielen 2 bis 10 zeigt, dass sich die Produkteigenschaften durch den (mehrmaligen) Einsatz der Mutterlauge vorhergehender Ansätze analytisch und anwendungstechnisch nicht verändern.

Der Vergleich von Vergleichsbeispiel 11 (Standard-Herstellmethode für Polyvinylbutyrale) mit den Beispielen 12 bis 20 zeigt, dass sich die Produkteigenschaften durch den (mehrmaligen) Einsatz der Mutterlauge vorhergehender Ansätze analytisch und anwendungstechnisch nicht verändern.

Bestimmungsmethoden:

1. Bestimmung der dynamischen Viskosität einer Lösung von Polyvinylacetalen (Lösungsviskosität):

90.00 ± 0.01 g Ethanol und 10.00 ± 0.01 g Polyvinylacetal wurden in einem 250 ml Erlenmeyerkolben mit Schliffstopfen eingewogen und bei 50°C in der Schüttelmaschine vollständig aufgelöst. Anschließend wurde auf 20°C abgekühlt und die dynamische Viskosität (DIN 53 015; Methode nach Höppler) bei 20°C mit einer geeigneten Kugel, z.B. der Kugel 3, bestimmt.

2. Bestimmung des Vinylalkohol-Gehalts:

Der Gehalt an Vinylalkohol-Gruppen in den Polyvinylacetalen wurde durch die Acetylierung der Hydroxylgruppen mit Essigsäureanhydrid in Gegenwart von Pyridin und 4-Dimethylaminopyridin ermittelt.

Dazu wurden 1 g ± 0.001 g Polyvinylacetal in 24 ml Pyridin und 0.04 g 4-Dimethylaminopyridin bei 50°C innerhalb von 2 Stunden gelöst. Die auf 25°C abgekühlte Lösung wurde mit 10 ml einer Mischung aus Pyridin und Essigsäureanhydrid (87/13 Volumenteile) versetzt und 1 Stunde intensiv durchmischt. Daraufhin wurden 30 ml einer Mischung aus Pyridin/Wasser (5/1 Volumenteile) zugesetzt und eine weitere Stunde geschüttelt. Anschließend wurde mit methanolischer 0.5 N KOH auf pH 7 titriert.

Berechnung :

$$\text{Gew.-\% Vinylalkohol} = [(100 \times M_w)/2000] \times (\text{ml Blindwert - ml Probe}).$$

Mit $M_w$ = Mittleres Molekulargewicht pro Repetiereinheit des Polymeren.

3. Bestimmung der Viskosität der Polyvinylalkohol-Lösungen:

Die Bestimmung der Viskosität der als Edukte eingesetzten teil- oder vollverseiften Festharze erfolgte analog zur Bestimmung der dynamischen Viskosität der Polyvinylacetale; es wurden nur 4 %-ige wässrige Lösungen eingesetzt.

Tabelle 1:

Menge Wasser (Mutterlauge) + HCl ≃ 3443 ml; PVAL 20 %ig:1335 ml

| | Mutterlauge Vorgänger | | | Mutterlauge / HCl | | Daten Vorlage | |
|---|---|---|---|---|---|---|---|
| Beispiel | Vorgän-ger | HCl-Konz in % | Leitfä-higkeit [mS/cm] | Mutter-lauge [ml] | HCl20%ig [ml] | HCl-Konz in % | Leitfä-higkeit [mS/cm] |
| V1 | - | - | - | Wasser 2617 | 826 | 5.1 | 417 |
| 2 | V1 | 3.72 | 307 | 3151 | 292 | 5.20 | 410 |
| 3 | 2 | 3.81 | 307 | 3169 | 274 | 5.25 | 401 |
| 4 | 3 | 3.82 | 307 | 3171 | 272 | 5.20 | 397 |
| 5 | 4 | 3.88 | 305 | 3182 | 261 | 5.18 | 391 |
| 6 | 5 | 3.85 | 300 | 3177 | 266 | 5.14 | 388 |
| 7 | 6 | 3:82 | 294 | 3171 | 272 | 5.15 | 387 |
| 8 | 7 | 3.82 | 294 | 3171 | 272 | 5.18 | 389 |
| 9 | 8 | 3.86 | 299 | 3178 | 265 | 5.23 | 388 |
| 10 | 9 | 3.89 | 297 | 3184 | 259 | 5.19 | 386 |
| | | 3.90 | 296 | | | | |

Tabelle 2:

| Beispiel | GC Mutterlauge | | GC Endprodukt | | Festanteil Mutterlauge [%] |
|---|---|---|---|---|---|
| | Acet-aldehyd [ppm] | Butyr-aldehyd [ppm] | Acet-aldehyd [ppm] | Butyr-aldehyd [ppm] | |
| V1 | 1800 | 8980 | 9.5 | 575 | - |
| 2 | 3600 | 10300 | 13 | 515 | 0.01 |
| 3 | 4380 | 11300 | 20 | 520 | 0.30 |
| 4 | 4720 | 11100 | 25 | 1020 | 0.28 |
| 5 | 5550 | 11900 | 13 | 790 | 0.25 |
| 6 | 5500 | 11900 | 20 | 1300 | 0.26 |
| 7 | 5600 | 12100 | 33 | 2150 | 0.33 |
| 8 | 6050 | 11800 | 27 | 1200 | 0.42 |
| 9 | 5650 | 11800 | 41 | 1550 | 0.33 |
| 10 | 5380 | 13000 | 22 | 1200 | 0.25 |
| | | | | | 0.37 |

Tabelle 2 (Fortsetzung):    Analysen Endprodukte

| Bei-spiel | Ausse-hen | Feuchte [%] | pH | Leitfä-higkeit [μS/cm] | OH-Zahl [%] | Viskos-ität [mPas] | Löslich-keit EtAc |
|---|---|---|---|---|---|---|---|
| V1 | weiß | 0.6 | 5.2 | 15.0 | 13.6 | 19.0 | klar |
| 2 | weiß | 0.8 | 5.1 | 15.0 | 13.3 | 19.0 | klar |
| 3 | weiß | 1.0 | 4.8 | 18.3 | 13.5 | 19.8 | klar |
| 4 | weiß | 0.8 | 4.8 | 10.9 | 13.4 | 19.4 | klar |
| 5 | weiß | 0.8 | 4.6 | 21.4 | 13.2 | 19.2 | klar |
| 6 | weiß | 0.6 | 4.4 | 26.1 | 13.2 | 19.3 | klar |
| 7 | weiß | 1.2 | 4.4 | 28.3 | 13.3 | 18.9 | klar |
| 8 | weiß | 1.0 | 4.4 | 22.6 | 13.1 | 19.0 | klar |
| 9 | weiß | 1.3 | 4.4 | 24.9 | 13.1 | 19.7 | klar |
| 10 | weiß | 1.3 | 4.3 | 23.3 | 13.2 | 19.4 | klar |

Tabelle 3:

Menge Wasser (bzw. Mutterlauge) + HCl = 3829 ml; PVAL 20 %ig: 1172 ml

| Beispiel | Mutterlauge Vorgänger | | | Mutterlauge / HCl | | Daten Vorlage | |
|---|---|---|---|---|---|---|---|
| | Vorgän-ger | HCl-Konz. % | Leitfä-higkeit [mS/cm] | Mutter-lauge | HCl 20%ig | HCl-Konz. % | Leitfä-higkeit [mS/cm] |
| V11 | - | - | - | Wasser 2715 | 1114 | 6.20 | 482 |
| 12 | V11 | 4.82 | 386 | 3481 | 348 | 6.30 | 477 |
| 13 | 12 | 4.96 | 388 | 3513 | 316 | 6.25 | 472 |
| 14 | 13 | 4.91 | 388 | 3502 | 327 | 6.20 | 470 |
| 15 | 14 | 4.92 | 387 | 3504 | 325 | 6.25 | 469 |
| 16 | 15 | 4.90 | 382 | 3499 | 330 | 6.30 | 470 |
| 17 | 16 | 4.93 | 381 | 3506 | 323 | 6.31 | 468 |
| 18 | 17 | 4.92 | 380 | 3504 | 325 | 6.30 | 469 |
| 19 | 18 | 4.96 | 386 | 3513 | 316 | 6.30 | 467 |
| 20 | 19 | 4.97 | 380 | 3516 | 313 | 6.21 | 462 |
| | | 4.99 | 380 | | | | |

Tabelle 4:

| GC Mutterlauge | | GC Produkt | Festgehalt |
|---|---|---|---|
| Beispiel | Butyraldehyd [ppm] | Butyraldehyd [ppm] | Mutterlauge [%] |
| V11 | 3370 | 230 | - |
| 12 | 4250 | 240 | 0.02 |
| 13 | 5120 | 320 | 0.20 |
| 14 | 4420 | 380 | 0.14 |
| 15 | 5050 | 415 | 0.22 |
| 16 | 5100 | 365 | 0.20 |
| 17 | 5150 | 380 | 0.26 |
| 18 | 4700 | 500 | 0.32 |
| 19 | 4760 | 410 | 0.29 |
| 20 | 5020 | 300 | 0.35 |
| | | | 0.33 |

Tabelle 4 (Fortsetzung): Analysen Endprodukte

| Bei-spiel | Aus-sehen | Feuch-te [%] | pH | Leitfä-higkeit [µS/cm] | OH-Zahl [%] | Viskosität 10%ig EtOH [mPas] | Löslichkeit Ethylacetat |
|---|---|---|---|---|---|---|---|
| V11 | weiß | 0.7 | 5.0 | 10.8 | 18.4 | 18.5 | klar |
| 12 | weiß | 0.9 | 4.8 | 13.4 | 17.5 | 18.0 | klar |
| 13 | weiß | 0.6 | 4.5 | 18.6 | 16.8 | 18.5 | klar |
| 14 | weiß | 0.8 | 4.6 | 12.1 | 16.9 | 18.1 | klar |
| 15 | weiß | 0.7 | 4.5 | 16.1 | 17.1 | 18.0 | klar |
| 16 | weiß | 0.9 | 4.6 | 15.2 | 16.3 | 18.0 | klar |
| 17 | weiß | 0.9 | 4.6 | 18.0 | 16.4 | 17.9 | klar |
| 18 | weiß | 0.8 | 4.4 | 18.5 | 16.4 | 18.0 | klar |
| 19 | weiß | 1.0 | 4.2 | 24.3 | 16.4 | 18.0 | klar |
| 20 | weiß | 1.0 | 4.3 | 23,9 | 16.5 | 18.0 | klar |

**Patentansprüche**

1. Verfahren zur Herstellung von Polyvinylacetalen, erhältlich mittels Verseifung eines Vinylester-Polymerisats und anschließender Acetalisierung des damit erhaltenen Polyvinylalkohols mit einem oder mehreren Aldehyden aus der Gruppe umfassend aliphatische und aromatische Aldehyde, mit 1 bis 15 C-Atomen, wobei

   a) der Polyvinylalkohol in einem wässrigen Medium vorgelegt wird,
   b) gegebenenfalls durch Zugabe von Säure ein pH-Wert von < 1 eingestellt wird,
   c) die Acetalisierung durch Zugabe der Aldehydkomponente eingeleitet wird, und
   d) das ausfallende Polyvinylacetal durch Filtration vom Filtrat abgetrennt wird,

   **dadurch gekennzeichnet, dass** als wässriges Medium zu 10 bis 100 Gew.-% das Filtrat eines vorausgegangenen Ansatzes verwendet wird, und gegebenenfalls das in d) anfallende Filtrat in einem weiteren Ansatz wiederverwendet wird.

**2.** Verfahren nach Anspruch 1, **dadurch gekennzeichnet, dass** das in Schritt d) anfallende Filtrat in einem weiteren Ansatz wiederverwendet wird.

**3.** Verfahren nach Anspruch 1 oder 2, **dadurch gekennzeichnet, dass** das Vinylester-Polymerisat ein oder mehrere Monomereinheiten enthält, aus der-Gruppe umfassend Vinylacetat, Vinylpropionat, Vinylbutyrat, Vinyl-2-ethylhexanoat, Vinyllaurat, 1-Methylvinylacetat, Vinylpivalat und Vinylester von $\alpha$-verzweigten Monocarbonsäuren mit 5 bis 11 C-Atomen

**4.** Verfahren nach Anspruch 1 bis 3, **dadurch gekennzeichnet, dass** als Vinylester-Polymerisat Polyvinylacetat, Vinylacetat-1-Methylvinylacetat-Copolymere oder Vinylacetat-(Meth)acrylsäure-Copolymere eingesetzt werden.

**5.** Verfahren nach Anspruch 1 bis 4, **dadurch gekennzeichnet, dass** der Polyvinylalkohol einen Hydrolysegrad von 50 Mol-% bis 100 Mol-% aufweist.

**6.** Verfahren nach Anspruch 1 bis 5, **dadurch gekennzeichnet, dass** als Aldehyde ein oder mehrere aus der Gruppe umfassend Formaldehyd, Acetaldehyd, Propionaldehyd, Butyraldehyd, Benzaldehyd eingesetzt werden.

**7.** Verfahren nach Anspruch 1 bis 6, **dadurch gekennzeichnet, dass** der Polyvinylalkohol als wässrige Lösung mit einer Konzentration von 10 bis 50 Gew.-% vorgelegt wird, und der gewünschte Festgehalt durch Zugabe des Filtrats eines vorausgegangenen Ansatzes eingestellt wird.

**8.** Verfahren nach Anspruch 1 bis 7, **dadurch gekennzeichnet, dass** Polyvinylacetale mit einem Acetalisierungsgrad von 45 bis 80 Mol-% und einem Polymerisationsgrad von mindestens 100 resultieren.

**Claims**

**1.** Process for preparing polyvinyl acetals obtainable by means of hydrolysis of a vinyl ester polymer and then acetalization of the resultant polyvinyl alcohol with one or more aldehydes from the group consisting of aliphatic and aromatic aldehydes having 1 to 15 carbon atoms, where

    a) the polyvinyl alcohol forms an initial charge in an aqueous medium,
    b) where appropriate, acid is added to adjust to a pH of < 1,
    c) the acetalization is initiated via addition of the aldehyde component, and
    d) the precipitating polyvinyl acetal is separated via filtration from the filtrate,

**characterized in that**, at 10 to 100% by weight of the aqueous medium, the filtrate of a preceding batch is used, and, where appropriate, in a further batch, the filtrate produced in d) is reused.

**2.** Process according to Claim 1, **characterized in that** the filtrate produced in step d) is reused in a further batch.

**3.** Process according to Claim 1 or 2, **characterized in that** the vinyl ester polymer contains one or more monomer units from the group consisting of vinyl acetate, vinyl propionate, vinyl butyrate, vinyl 2-ethylhexanoate, vinyl laurate, 1-methylvinyl acetate, vinyl pivalate, and vinyl esters of $\alpha$-branched monocarboxylic acids having 5 to 11 carbon atoms.

**4.** Process according to any of Claims 1 to 3, **characterized in that** the vinyl ester polymer used comprises polyvinyl acetate, vinyl acetate-1-methylvinyl acetate copolymers, or vinyl acetate (meth)acrylic acid copolymers.

**5.** Process according to any of Claims 1 to 4, **characterized in that** the polyvinyl alcohol has a degree of hydrolysis of 50 to 100 mol%.

**6.** Process according to any of Claims 1 to 5, **characterized in that** the aldehydes used comprise one or more from the group consisting of formaldehyde, acetaldehyde, propionaldehyde, butyraldehyde, benzaldehyde.

**7.** Process according to any of Claims 1 to 6, **characterized in that** the polyvinyl alcohol forms an initial charge in the form of an aqueous solution with a concentration of 10 to 50% by weight, and the desired solids content is established via addition of the filtrate from a preceding batch.

**8.** Process according to any of Claims 1 to 7, **characterized in that** polyvinyl acetals are obtained with a degree of acetalization of 45 to 80 mol% and with a degree of polymerization of at least 100.


**Revendications**

**1.** Procédé pour la préparation de polyvinylacétals, pouvant être obtenus par saponification d'un polymère d'ester de vinyle et acétalisation consécutive du poly(alcool vinylique) ainsi obtenu par un ou plusieurs aldéhydes du groupe comprenant les aldéhydes aliphatiques et aromatiques comprenant 1 à 15 atomes de carbone,

   a) le poly(alcool vinylique) étant disposé au préalable dans un milieu aqueux
   b) le pH étant le cas échéant réglé par addition d'acide à une valeur <1,
   c) l'acétalisation étant démarrée par addition du composé aldéhyde,
   d) le polyvinylacétal qui précipite étant séparé par filtration du filtrat,

**caractérisé en ce qu'**on utilise comme milieu aqueux à raison de 10 à 100% en poids le filtrat d'une charge préalable et on remploie le cas échéant le filtrat produit dans l'étape d) dans une charge ultérieure.

**2.** Procédé selon la revendication 1, **caractérisé en ce que** le filtrat produit dans l'étape d) est remployé dans une charge ultérieure.

**3.** Procédé selon la revendication 1 ou 2, **caractérisé en ce que** le polymère d'ester de vinyle contient une ou plusieurs unités monomères du groupe comprenant l'acétate de vinyle, le propionate de vinyle, le butyrate de vinyle, le 2-éthylhexanoate de vinyle, le laurate de vinyle, l'acétate de 1-méthylvinyle, le pivalate de vinyle et les esters vinyliques d'acides monocarboxyliques ramifiés en position α, comprenant 5 à 11 atomes de carbone.

**4.** Procédé selon la revendication 1 à 3, **caractérisé en ce qu'**on utilise comme polymère d'ester de vinyle le poly(acétate de vinyle), des copolymères d'acétate de vinyle-acétate de 1-méthylvinyle ou des copolymères d'acétate de vinyle-acide (méth)acrylique.

**5.** Procédé selon la revendication 1 à 4, **caractérisé en ce que** le poly(alcool vinylique) présente un degré d'hydrolyse de 50% en mole à 100% en mole.

**6.** Procédé selon la revendication 1 à 5, **caractérisé en ce qu'**on utilise comme aldéhydes un ou plusieurs aldéhydes du groupe comprenant le formaldéhyde, l'acétaldéhyde, le propionaldéhyde, le butyraldéhyde, le benzaldéhyde.

**7.** Procédé selon la revendication 1 à 6, **caractérisé en ce que** le poly(alcool vinylique) est disposé au préalable comme solution aqueuse en une concentration de 10 à 50% en poids, et la teneur en solides souhaitée est réglée par addition du filtrat d'une charge préalable.

**8.** Procédé selon la revendication 1 à 7, **caractérisé en ce qu'**on obtient des polyvinylacétals présentant un degré d'acétalisation de 45 à 80% en mole et un degré de polymérisation d'au moins 100.